(19) Europäisches Patentamt
European Patent Office
Office européen des brevets

(11) **EP 4 806 548 A1**

(12) **EUROPEAN PATENT APPLICATION**

(43) Date of publication:
**16.09.2026 Bulletin 2026/38**

(21) Application number: **25382233.2**

(22) Date of filing: **13.03.2025**

(51) International Patent Classification (IPC):
***B01J 19/00*** *(2006.01)* ***C01B 3/40*** *(2006.01)*

(52) Cooperative Patent Classification (CPC):
**B01J 19/0093;** B01J 2219/0079; B01J 2219/00822; B01J 2219/00824; B01J 2219/00835; C01B 3/326; C01B 2203/0233; C01B 2203/1058; C01B 2203/1211

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Linares Biodiesel Technology SL**
**23490 Linares (ES)**

(72) Inventors:
- **SANCHEZ PALOMARES, ANDRES**
**23490 LINARES (ES)**
- **MASA BLANCO, FRANCISCO JAVIER**
**23490 LINARES (ES)**
- **GOMEZ RONCERO, LUIS FRANCISCO**
**23490 LINARES (ES)**
- **LAGUNA ESPITIA, OSCAR HERNANDO**
**18199 CÁJAR (ES)**
- **LOPEZ GARCIA, ANA BELEN**
**23071 JAEN (ES)**
- **DUBBELMAN VIZCAÍNO, ALEJANDRO**
**23071 JAEN (ES)**
- **COBO CEACERO, CARLOS JAVIER**
**23071 JAÉN (ES)**
- **GARCIA MORALES, MIGUEL ANGEL**
**23490 LINARES (ES)**
- **DE LOS SANTOS APARICIO, MARIO**
**50004 ZARAGOZA (ES)**

(74) Representative: **Aguilar Catalán, Blanca**
**Calle Madre Rafols 2, Planta 4**
**Oficina 8**
**Edificio Aida**
**50004 Zaragoza (ES)**

(54) **POCS (PERIODIC OPEN CELL STRUCTURES) BASED MICROREACTOR FOR GLYCEROL REFORMING**

(57) The present invention discloses the use of microreactor based on periodic open cellular structures (POCS), in which the catalytic system is embedded, for glycerol steam reforming and synthesis gas obtaining.



Processed by Luminess, 75001 PARIS (FR)

## Description

### TECHNICAL FIELD

This invention relates to the field of oxidative glycerol reforming to obtain synthesis gas. Particularly, it concerns to the use of microreactor based on periodic open cellular structures (POCS), in which the catalytic system is embedded, for glycerol steam reforming and synthesis gas obtaining.

### BACKGROUND ART

Glycerol is obtained as a byproduct in transesterification of triglycerides to obtain fatty acid methyl esters (also called biodiesel due to one the main uses), representing approximately 10% of biodiesel production. This process can present a high atom economy or efficiency depending on conversion and the use of byproducts. Traditionally, glycerol was obtained through several processes such as soap making or fatty alcohol, fatty acid methyl ester and fatty acid production, through synthetic methods or other methods such as microbial fermentation. Considering the future trend about biodiesel production, it is not surprising that glycerol generation has considerably increased in recent years, which can imply an opportunity for its reuse in industrial processes. A feasible possibility is the use of glycerol as an energy source to obtain synthesis gas (a mixture of hydrogen and carbon monoxide at different ratios). This synthesis gas, if it is suitably treated, can produce fuel in an environmentally friendly process, as glycerol is obtained from chemical routes by using renewable raw materials.

Glycerol steam reforming (GSR) is one of the most typical methods to produce hydrogen in industry, as it is efficient and profitable at an industrial level. This technique does not require excessively high pressures and higher hydrogen percentages are produced at high temperatures. Steam reforming consists of the conversion of hydrocarbons to hydrogen or synthesis gas, through a treatment at high temperatures with an oxidizing agent and a catalyst. Thus, glycerol reacts with steam to produce $H_2$, $CO_2$ and CO, in a highly endothermal process ($\Delta H_0$ = 123 kJ/mol) represented in Equation (1), which is a combination of glycerol decomposition ($\Delta H_0$ = 251 kJ/mol, Equation (2)) and water-gas shift reaction (WGS, $\Delta H_0$ = -41 kJ/mol, Equation (3)):

$$C_3H_8O_3 + 3H_2O \leftrightarrow 3CO_2 + 7H_2 \qquad (1)$$

$$C_3H_8O_3 \leftrightarrows 3CO + 4H_2 \qquad (2)$$

$$CO + H_2O \leftrightarrows CO_2 + H_2 \qquad (3)$$

Consequently, the $H_2$ and CO ratio depends on the reaction conditions, including the kind of catalyst used, as CO can be converted in the WGS reaction to produce carbon dioxide. Also, other secondary reactions can take place, such as methane generation through exothermal reactions like those included in Equations (4) and (5):

$$CO + H_2 \leftrightarrows CH_4 + H_2O \qquad (4)$$

$$CO_2 + 4H_2 \leftrightarrows CH_4 + 2H_2O \qquad (5)$$

Therefore, the presence of these side reactions explains the difficulty in reaching 100% selectivity towards $H_2$ during glycerol steam reforming. To increase $H_2$ production, through GSR, a suitable catalyst selection should be carried out to promote the cleavage of C-C, O-H and C-H bonds in the oxygenated hydrocarbon reactant and facilitate the WGS to remove adsorbed CO [1]. Other factors with a strong influence on glycerol steam reforming are the following:
Feed flow: Overfeeding could reduce the yield of conversion, whereas the contrary could imply a poor gas production. The optimum flow maximizes the energy efficiency of the process.

Temperature: This is one of the key factors, as it affects the yield of the process and gas composition. In general, high temperature values correspond to a higher gas production and higher $H_2$ percentage in the outlet gas.

Steam to carbon (S/C) ratio: As it increases, the gas produced is richer in hydrogen, whereas the gas flow decreases.

Catalyst use: The use of catalysts (normally transition metals belonging to group VIIIB) is essential in this kind of process to obtain high conversion values. Also, the use of a support (such as $Al_2O_3$, $ZrO_2$, $SiO_2$ or $TiO_2$) can promote conversion, and the particle size can play an important role in favouring mass transfer and contact among reagents within the reactor.

Hydrogen production from renewable biomass has gained interest in recent years in the scientific community, international agencies and governments, promoting its implementation through international green chemistry policies [1].

Thus, biomass and glycerol reforming has been studied through gasification to improve glycerol conversion to hydrogen depending on the temperature, pressure and steam to carbon ratio, obtaining favourable results at high temperatures and low pressures.

However, the reaction network in steam reforming of biomass derivatives is generally more complex than that in steam reforming of fossil fuels like methane, due to their larger molecular size and varied oxygen-containing functionalities [2] The formation of coke is also very common to occur during GSR [3, 4, 5, 6, 7, 8], carbon-containing gaseous products (CO, $CH_4$ and $CO_2$) can be coke precursors according to Eqs. (6)-(9) [9].

$$2CO \leftrightarrows CO_2 + C \qquad (6)$$

$$CH_4\ 2H_2 + C \qquad (7)$$

$$CO + H_2 \leftrightarrows H_2O + C \qquad (8)$$

$$CO_2 + 2H_2 \leftrightarrows 2H_2O + C \qquad (9)$$

Moreover, glycerol and its derived intermediates tends to polymerize under the conditions of steam reforming. Oxygenated intermediates (like acetaldehyde, formaldehyde, and acrolein) undergo condensation and polymerization, forming high-molecular-weight species that deposit on the catalyst. Further to this, it is well-known by those skilled in the art that coking is a serious issue during steam reforming of these organic compounds [10, 11] Therefore, the avoiding of the coke formation, or minimizing it, there is always a mandatory requirement of any glycerol reforming process implemented in industrial scale.

Furthermore, microreaction technology is currently one of the most innovative techniques in the field of chemical synthesis and similar fields. Compared to conventional chemical reactors, the microreactor has certain unique advantages as reduced diffusion distance between the reactants, excellent mass transfer and excellent heat transfer due to its high surface area-to-volume ratio. The intimate contact between molecules allows optimization of both the product-catalyst interface and energy transfer, leading to higher efficiency and yield in endothermic reactions. In addition, microreactors can be directly scaled up for rapid production, which is difficult for conventional reactor.

The amounts of reactants in the microreactor are relatively small, which can lead to better process safety, especially for the hazardous substances production and exothermic reactions, as methanation of $CO_2$.

The document CN113735059A "Alcohol reforming microreactor and hydrogen production method" disclosed a microreactor for alcohol, including glycerol, reforming, which is characterized in that it comprises an evaporation plate, a middle partition and a reforming plate which are sequentially stacked from top to bottom. An evaporation chamber is formed between, and the middle partition, and a reforming chamber is formed between the middle partition and the reforming plate.

The document US2009238751A1 "Process Intensification In Microreactors" disclosed a microreactor, available for fuel reforming to obtain hydrogen comprising a plurality of elongate reaction chambers defining an arrangement, the elongate reaction chambers of the plurality thereof including at least a first elongate chamber adapted to support a first reactor function occurring therewithin associated with a first process feed, a second elongate chamber adapted to support a second reactor function occurring therewithin associated with a second process feed, and a third elongate chamber adapted to support a third reactor function occurring therewithin associated with a third process feed.

Bobadilla *et col* [12, 13] investigated a Ni-based metallic monolith in terms of highly active and stable $H_2$ production by glycerol steam reforming. The authors emphasized that strong interaction between the catalyst particles and the washcoated alumina layer improved functionality of the monolithic catalyst. Koc *et col* [14] investigate non-oxidative and oxidative glycerol steam reforming over Ni-based catalysts in a linear microchannel reactor and they found coke formation under all conditions of the process, although it decreases upon addition of $O_2$ into the feed. Delparish *et col* [15] carry out parametric investigation of glycerol reforming run in a linear rectangular microchannel reactor with a coated or packed bed of $Rh/Al_2O_3$ catalyst and they almost eliminate the coke formation under certain conditions.

On the other hand, structured catalytic became popular in different industrial processes as an alternative for conventional packed fixed-bed reactors. Structuring of process units and/or their internals is one of the main strategies for process intensification. The aim is to realize a well-defined, uniform, and easily controllable and adjustable processing experience for all molecules, thereby approximating the optimal process route. This ultimately leads to highly efficient, flexible, resilient, and safe processes. Periodic open cellular structures (POCS) represent a promising new class of structured internals as next-generation catalyst supports in reactors. The concept of cellular structure (including foams and honeycombs) was originally proposed by Gibson and Ashby [16]. However, periodic open cellular structures are another type of cellular material. The difference between POCS, foams and honeycombs mainly lie in the unit cell topology and properties. In general, periodic open cellular structures are three-dimensional lattice structures with unit cell dimensions from 0.1 to 10 mm; thus, they are also called mesostructures [17]. Unlike solid foams (open- and closed-

cell), POCS are categorized as non-stochastic cellular solids with a regular strut and node arrangement and controlled organization of their unit cells. POCS feature a well-defined morphology and can be fabricated with high reproducibility even for complex geometries by means of additive manufacturing. In recent years, additive manufacturing techniques offer the possibility to manufacture highly reproducible POCS with a well-defined and ordered geometry and with the desired dimensions directly from CAD model. Additive manufacturing saves time and energy, as well as reducing costs, because it is capable of directly producing technical components. Additive manufacturing enables the use of metals as stainless steel, titanium, cobalt chromium, alloys or aluminium alloys.

The use of POCS in microreactors results in a uniform and easily controllable flow field, which allows for adjusting the heat and mass transport processes to realize optimal process conditions. The development of POCS microreaction technology is facilitated by the increasing demand of the distribution and portability. It is likely to have small or temporary chemical equipment in the chemical process, so the microreactors are easily placed in the desired location or carried. In microreactor technology recent advancements have centered on new materials and manufacturing methods that could lead to promising commercial applications such as efficient fuel cells and mini-chemical plants.

## SUMMARY OF INVENTION

As it has been explained, coke formation is a major issue during glycerol reforming, as it can lead to catalyst deactivation, reduced efficiency, and reactor blockages. The problem arises due to the complex decomposition pathways of glycerol, which can generate carbonaceous deposits. The inventors have surprisingly found that the use of periodic open cells structures (POCS), in which the catalytic system is embedded, coupled in a microreactor is a suitable process to obtain synthesis gas throughout a glycerol steam reforming. Being well known the pitfall of the reaction due to coke deposition, those skilled in the art would not be motivated to use of POCS coupled in microreactor, in which the catalytic system is embedded, with cells between 0,5 and 20 millimetres in size, for glycerol reforming since the high possibility of deactivation of the catalytic system and potential flow blocking.

In support of this vision, as it is demonstrated in the experimental section, the use of periodic open cells structures (POCS), in which the catalytic system is embedded, coupled in a microreactor is a suitable process to obtain synthesis gas throughout a glycerol steam reforming reactions, while in glycerol dry reforming reactions the use of POCS, in which the catalytic system is embedded, coupled in a microreactor generates significant amounts of coke that eventually deactivate the catalyst system and block several flow channels.

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples and drawings are provided by way of illustration, and they are not intended to be limiting of the present invention. Furthermore, the present invention covers all possible combinations of particular and preferred embodiments described herein.

For the purposes of the present invention, the ranges indicated include the lower and upper ends of the range. The ranges given, such as temperatures, times, ratios and the like, must be considered approximate, unless specifically stated.

For the purposes of the present invention, the terms "periodic open cells structure" and "POCS" are used interchangeably, and they refer to non-stochastic cellular solid composed of three-dimensional lattice structures with unit cell dimensions from 0,5 to 20 mm, with a regular strut and node arrangement, and controlled organization of their unit cells. Periodic open cells structure (POCS) are also defined as three-dimensional open-space structures, composed of cells that are formed by struts; strut-to-strut connectivity is called a node, and the neighbouring cells are connected by the openings called windows. A broad range of unit cell types can be used in POCS depending on its geometry, including the geometries selected form the group of cubic cells, tetrahedral cells, octahedral cells, Kelvin cells, diamond cells, gyroid cells and Voronoi cells.

For the purposes of the present invention, the term "glycerol reforming" refers to a thermochemical process wherein the glycerol is converted in synthesis gas (a mixture of hydrogen plus carbon monoxide, and other by-products as carbon dioxide, methane and coke among others) in the presence of a catalytic system. The term "glycerol dry reforming" refers to those glycerol reforming processes that are carried out in absence of water and/or water steam. For the purposes of the present invention, the terms "glycerol steam reforming" refers to a thermochemical process wherein the glycerol is converted in synthesis gas (a mixture of hydrogen plus carbon monoxide, and other by-products as carbon dioxide, methane and coke among others) in the presence of water steam and a catalytic system.

For the purposes of the present invention, the term "catalytic system" refers to the assembly composed of the catalytic active metal, in any form (salts, oxides, mixtures thereof), and the porous material on which it is supported.

In this invention, glycerol steam reforming is carried out in a microreactor relayed on periodic open cellular structures, produced by additive manufacturing, with the catalytic system embedded in the mentioned POCS cells. The microreactor consists of at least one metallic hollow tube contained at least one POCS placed into it, with at least one inlet

connection in one extreme and an at least one outlet connection in the opposite extreme, placed in a thermostatic device. One inlet stream is glycerol in gas phase and the second inlet stream is water steam. Both gases and catalytic system embedded in POCS cells interact inside the metallic hollow tube, inducing the thermochemical reactions to obtain hydrogen, carbon monoxide and other byproducts.

This reactor is an easily scalable configuration: simply varying the number of tubes, the hourly capacity of the plant could be changed.

The catalytic system for glycerol steam reforming process is usually based on active metal as nickel (Ni), ruthenium (Ru), rhodium (Rh), palladium (Pd), platinum (Pt), iridium (Ir) cobalt (Co), perovskite-based and combinations thereof. Those metals are supported on a porous ceramic material, which is mechanically and thermally stable, such as alumina ($Al_2O_3$), silica ($SiO_2$), titanium dioxide ($TiO_2$), $Mg/Al_2O_3$, $AlMgO_4$, $ZrO_2$, $CeO_2/ZrO_2$, MgO, CaO, silicon carbide, ceramic materials with a high specific surface and mixtures thereof.

In the present invention, the catalyst system is embedded in POCS. There are several options for impregnation of the catalytic system in the POCS. Commonly, the impregnation of catalytic system in POCS surface request the previous dispersion of the catalytic system in a solvent and/or mixture of solvents to obtain a slurry. Then, the printed POCS is wash coated by immersing and withdrawing in the slurry followed by the elimination of the excess. In wash coating procedures, POCS cells are dipped into slurries, kept in the particle dispersion for a certain period and finally withdrawn. Once the metallic POCS is withdrawn it must be drained and the excess slurry eliminated. Usually, excess slurry is removed either by air blowing and/or centrifuging. In general, by gravitational draining or by applying some form of pressure or vacuum to clear the channels of the excess but the adhered catalyst layer.

In some cases, catalysts are introduced into the POCS in vapor form (technique called chemical Vapor Deposition). The catalyst vapor reacts or condenses on the internal surfaces of the POCS, forming a thin layer of active catalyst within the pores.

In some cases, the catalysts are deposited onto the internal surfaces of the porous POCS by electrochemical deposition, using an electric current to drive a chemical reaction.

Afterwards, to form a thin oxide layer on the metal surface the POCS cell is dried and calcined to suitable temperatures. Finally, at least one POCS is placed into at least one metallic hollow tube to create the microreactor.

In one embodiment, the catalytic system charge density ranged from 5 to 250 grams of catalytic system over square meter of POCS, optionally from 20 to 200 $g/m^2$, further optionally from 30 to 150 $g/m^2$.

In one embodiment, the metallic hollow tube is between 10 and 1000 centimetres long. In one embodiment, the metallic hollow tube is between 50 and 750 centimetres long. In one embodiment, the metallic hollow tube is between 100 and 500 centimetres long. In one embodiment, the metallic hollow tube has between 1 and 20 centimetres of diameter. In one embodiment, the hollow metallic tube has between 2 and 15 centimetres of diameter. In one embodiment, the hollow metallic tube has between 3 and 10 centimetres of diameter. In one embodiment, the thermostatic device is an oven. In one embodiment, the oven is an electric oven. In one embodiment, the oven is a gas oven. In one embodiment, the microreactor involves one tube. In one embodiment, the microreactor involves between 2 and 10000 tubes. In one embodiment, the microreactor involves between 10 and 1000 tubes. In one embodiment, the microreactor involves between 50 and 500 tubes.

In one embodiment, the POCS are based in a cell unit selected from the group of cubic cell unit, diamond cell unit, Kelvin cell unit, gyroid cell unit and a combination thereof. In one embodiment, the POCS is impregnated with a catalyst system based on a metal selected from the group of nickel (Ni), ruthenium (Ru), rhodium (Rh), palladium (Pd), platinum (Pt), iridium (Ir) cobalt (Co), perovskite-based and combinations thereof. In one embodiment, the catalyst metals are supported on a porous ceramic material selected from the group of alumina ($Al_2O_3$), silica ($SiO_2$), titanium dioxide ($TiO_2$), $Mg/Al_2O_3$, $AlMgO_4$, $ZrO_2$, $CeO_2/ZrO_2$, MgO, CaO, silicon carbide, ceramic materials with a high specific surface and combinations thereof.

In one embodiment, the glycerol steam reforming is carried out in the range of 550°C and 850°C, optionally from 600°C to 800°C, further optionally from 650°C to 750°C.

In one embodiment, the glycerol steam reforming is carried out with a steam-to-glycerol molar ratio ranged from 20 to 1, optionally from 15 to 1, further optionally from 12 to 1.

## DESCRIPTION OF EXAMPLES

The following examples and embodiments are provided by way of illustration, and they are not intended to be limiting for this presentation.

### Catalytic system preparation.

The catalytic system selected in this embodiment for the reforming of glycerine is a system of Ni (14 wt.%) supported on Mg-doped $Al_2O_3$. This catalytic system was selected due to well-known tendency of Ni based catalytic

system to promote coke formation during glycerol reforming reaction. First, the support was prepared using an impregnation method with $Al_2O_3$ powder, which was dispersed under stirring in a $Mg(NO_3)_2$ ethanolic solution (0.5 M). The amount of Mg was set to achieve a weight distribution of 90 wt.% $Al_2O_3$ and 10 wt.% Mg. The solvent was removed using a rotary evaporator, and the resulting solid was dried overnight at 90°C and then calcined for 6 hours at 1000°C (2°C/min), resulting in the Mg-$Al_2O_3$ support.

Subsequently, the support underwent an impregnation procedure using a similar experimental setup with the rotary evaporator, but this time with a $Ni(NO_3)_2$ ethanolic solution (1.0 M) to achieve a composition of 14 wt.% Ni and 86 wt.% $Al_2O_3$. After solvent removal, the resulting solid was dried overnight at 90°C and then calcined at 500°C for 3 hours (2°C/min).

**The POCS system.**

The metal microreactors are cylindrical structures bounded by an outer wall. Inside, they feature a periodic open porosity structure pattern with a body-centered cubic unit cell. These devices are produced through additive manufacturing using the FDM technique with a filament containing embedded 316 steel. The structure was designed using CAD tools, and the design was subsequently adjusted with software to fine-tune the printing layers and optimize the arrangement of the piece in the printing area. The printed pieces were then removed and subjected to a thermal post-treatment of sintering, which allows for the final consolidation of the material by eliminating the additives that make the filament printable. During this thermal treatment, the total volume of the piece shrinks, a factor that was considered during the design stage to ensure that the final dimensions meet the requirements for the microreactors. The main features of the metal POCS cells at laboratory scale and pilot plant scale are presented in Tables 1 and 2, respectively.

Table 1. Features of the metal POCS cells for the laboratory experiments

| Feature | Unit | Value |
|---|---|---|
| Height | mm | 30 |
| External diameter | mm | 44 |
| Thickness of the external wall | mm | 1,25 |
| Unit cell volume | $mm^3$ | 2,5 |
| Strut diameter | mm | 0,9 |
| Exposed area | $m^2$ | 0,05087 |
| Catalyst Charge | Kg | 0,005 |
| Catalyst Charge Density | $Kg/m^2$ | 0,09828 |

Table 2. Features of the metal POCS cells for the pilot scale

| Feature | Unit | Value |
|---|---|---|
| Height | mm | 100 |
| External diameter | mm | 100 |
| Thickness of the external wall | mm | 1,25 |
| Unit cell volume | $mm^3$ | 2,5 |
| Strut diameter | mm | 0,9 |
| Exposed area | $m^2$ | 0,936 |
| Catalyst Charge | Kg | 0,030 |
| Catalyst Charge Density | $Kg/m^2$ | 0,032 |

All the microreactors were coated with a slurry of reforming catalyst, the formulation of which is presented in Table 3. To achieve this, the POCS cells were fully immersed in the slurry mixture. After one minute, the pieces were extracted, and the excess slurry was removed by centrifugation. This procedure was repeated several times until the desired catalyst loading was achieved.

Table 3. Formulation of the slurry fur the coating of metal POCS cells.

| Component | Wt. % |
|---|---|
| Catalyst | 15% |
| PVOH (mowiol 4-88) | 1% |
| Nyacol Al20 (Al203 al 20 wt.%/H2O) | 5% |
| H2O | 79% |

**Experimental setup for the Steam Glycerol Reforming (SGR).**

Pretreatment of the coated POCS cells: prior to the catalytic tests, the systems were activated under a reductant condition using a feed-stream of $H_2$ 10 Vol.% in $N_2$ (total flow: 100 mL/min) during 1 hour at 750°C.

Temperature of operation: 750°C

Pressure: Atmospheric pressure

Reactive Feed-steam ($N_2$ + $H_2O$ + Glycerine):
Total of gas phase: The catalytic devices were designed to process 1 l/min of gaseous phase per 1 g of catalyst. And the cited gaseous phase is a combination of $N_2$ and an evaporated mixture of $H_2O$/Glycerine (50 wt.%/50 wt.%). The space velocity in all cases was set at 36000 mL/hxg.

**Experimental setup for the Dry Glycerol Reforming (DGR).**

Pretreatment of the coated POCS cells: prior to the catalytic tests, the systems were activated under a reductant condition using a feed-stream of $H_2$ 10 Vol.% in $N_2$ (total flow: 100 mL/min) during 1 hour at 750°C.

Temperature of operation: 750°C

Pressure: Atmospheric pressure

Reactive Feed-steam ($CO_2$ + Glycerine):
Total of gas phase: The catalytic devices were designed to process 1 l/min of gaseous phase per 1 g of catalyst. And the cited gaseous phase is a combination of $CO_2$ and a evaporated Glycerine. The space velocity in all cases was set at 36000 mL/hxg.

**Results.**

Both reactions, DGR and SGR, were carried out for ten successive times, ten cycles. The results of both glycerol reforming reactions in the first cycle were compared in table 4.

Table 4. Results of first cycle of DGR and SGR with POCS microreactor.

| | | DGR | SGR |
|---|---|---|---|
| **Total conversion of glycerol into gas phase** | | 80,0% | 70,0% |
| **Selectivity of solid phase** | | 18,0% | 4,0% |
| **Selectivity to liquid phase** | | 2,0% | 22,0% |
| **Selectivity to gas phase** | | 80,0% | 74,0% |
| **Product distribution of gas phase** | **$H_2$** | 30,0% | 58,0% |
| | **CO** | 17,5% | 16,5% |
| | **$CO_2$** | 34,5% | 16,5% |
| | **$CH_4$** | 17,5% | 7,5% |
| | **Others** | 0,5% | 1,5% |

Table 5. Results of total conversion of glycerol into gas phase of ten successive cycles of DGR and SGR with POCS microreactor.

| Total conversion of glycerol into gas phase | DGR | SGR |
|---|---|---|
| Cycle 1 | 80% | 70% |
| Cycle 2 | 72% | 68% |
| Cycle 3 | 58% | 65% |
| Cycle 4 | 34% | 67% |
| Cycle 5 | 33% | 69% |
| Cycle 6 | 34% | 65% |
| Cycle 7 | 35% | 65% |
| Cycle 8 | 36% | 64% |
| Cycle 9 | 34% | 61% |
| Cycle 10 | 36% | 63% |

**Conclusions.**

As can be observed from the results in table 4, the SGR process has a lower solid phase selectivity than the DGR reaction, which leads to a lower coke production and therefore less channel blocking in the POCS cells. This channel blocking means a lower catalytic active phase and would be the cause of the decrease in the conversion of glycerol to gas phase in the DGR reaction, which can be seen in table 5.

**CITATION LIST**

[1] González JF, Álvarez MurilloA, González Arroyo Á, Nogales-Delgado S. Glycerol Steam Reforming in a Pilot Plant: Effect of Temperature and Catalyst Load. Applied Sciences. 2023; 13(18):10376.

[2] Rocha DHD, de Souza TAZ, Coronado CJR, Silveira JL, Silva RJ. Exergoenvironmental analysis of hydrogen production through glycerol steam reforming. Int J Hydrogen Energy. 2021; 46 (1), pp. 1385-1402.

[3] Yus M, Soler J, Herguido J, Menéndez M. Glycerol steam reforming with low steam/glycerol ratio in a two-zone fluidized bed reactor. Catalysis Today. 2018; Volume 299, Pages 317-327.

[4] Pastor-Pérez L, Sepúlveda-Escribano A. Low temperature glycerol steam reforming on bimetallic PtSn/C catalysts: on the effect of the Sn content. Fuel. 2017; 194, pp. 222-228.

[5] Charisiou ND, Papageridis KN, Siakavelas G, Tzounis L, Kousi K, Baker MA, Hinder SJ, Sebastian V, Polychronopoulou K, Goula MA. Glycerol steam reforming for hydrogen production over nickel supported on alumina, zirconia and silica catalysts. Top Catal. 2017; 60, pp. 1226-1250

[6] Araque M, Centeno MA, Roger AC. Role of ruthenium on the catalytic properties of CeZr and CeZrCo mixed oxides for glycerol steam reforming reaction toward H2 production. Catal Today. 2015; 242, pp. 80-90

[7] Silva JM, Ribeiro LS, Órfão JJM, Soria MA, Madeira LM. Low temperature glycerol steam reforming over a Rh-based catalyst combined with oxidative regeneration. Int J Hydrogen Energy. 2019: 44, pp. 2461-2473.

[8] Pompeo F, Santori G, Nichio NN. Hydrogen and/or syngas from steam reforming of glycerol. Study of platinum catalysts. Int J Hydrogen Energy. 2010; 35, pp. 8912-8920.

[9] Silva JM, Soria MA, Madeira LM. Thermodynamic analysis of glycerol steam reforming for hydrogen production with in situ hydrogen and carbon dioxide separation. J Power Sources. 2015; 273, pp. 423-430.

[10] Hanif, M.A.; Nisar, S.; Akhtar, M.N.; Nisar, N.; Rashid, N. Optimized Production and Advanced Assessment of Biodiesel: A Review. Int. J. Energy Res. 2018; 42, 2070-2083.

[11] Sundus, F.; Fazal, M.A.; Masjuki, H.H. Tribology with Biodiesel: A Study on Enhancing Biodiesel Stability and Its Fuel Properties. Renew. Sustain. Energy Rev. 2017;70, 399-412.

[12] Bobadilla LF, Álvarez M, Dominguez A, Romero-Sarria MI, Centeno F, Montes M, Odriozola J. Influence of the shape of Ni catalysts in the glycerol steam reforming. Applied Catalysis B: Environmental. 2012; 123-124. 379-390.

[13] Bobadilla LF, Blay V, Álvarez M, Domínguez A, Romero-Sarria MI, Montes M, Odriozola J. Intensifying glycerol steam reforming on a monolith catalyst: A reaction kinetic model. Chemical Engineering Journal. 2016; 306. 933-941.

[14] Koc S, Ahmet A. Reforming of glycerol to hydrogen over Ni-based catalysts in a microchannel reactor. Fuel Processing Technology. 2016; 156.

[15] Delparish A, Koc S, Caglayan B, Avci A. Oxidative steam reforming of glycerol to synthesis gas in a microchannel reactor. Catalysis Today. 2019; 323. 200-208.

[16] Gibson L.J.; Ashby M.F. Cellular solids: Structure and Properties, 1st ed.; Cambridge University Press: Cambridge, UK, 1988.

[17] Iwaniszyn M. Periodic Open Cellular Structures (POCS) as Catalyst Supports-A Review. Energies. 2022; 15, 7703.

## Claims

1. Use of Periodic Open Cells Structures in a microreactor for glycerol steam reforming process.

2. The use according to claim 1 wherein the glycerol steam reforming process is carried out in at least one tubular reactor filled with at least one Periodic Open cells Structure with the catalytic system embedded.

3. The use according to claim 1-2 wherein the Periodic Open Cells Structure is based on at least one three-dimensional geometric figures selected from the group of cubic cells, tetrahedral cells, octahedral cells, Kelvin cells, diamond cells, gyroid cells, Voronoi cells and combinations thereof.

4. The use according to claim 1-3 wherein the Periodic Open Cells Structures are obtained by additive manufacturing with a material selected from the group of ceramics and/or metals.

5. The use according to claim 1-4 wherein the Periodic Open Cells Structures have unit cell dimensions from 0,5 to 20 mm, optionally from 1 to 10 mm, further optionally from 1,5 to 5 mm.

6. The use according to claims 1-5 wherein the glycerol steam reforming process is carried out with a catalytic system that use as an active catalyst at least one metal, and/or its oxides and/or its salts, selected from the group of nickel (Ni), ruthenium (Ru), rhodium (Rh), palladium (Pd), platinum (Pt), iridium (Ir) cobalt (Co), perovskite-based and combinations thereof.

7. The use according to claims 1-6 wherein the glycerol steam reforming process is carried out with a catalytic system that use as supporter at least one material selected from the group alumina ($Al_2O_3$), silica ($SiO_2$), titanium dioxide ($TiO_2$), $Mg/Al_2O_3$, $AlMgO_4$, $ZrO_2$, $CeO_2/ZrO_2$, MgO, CaO, silicon carbide, ceramic materials with a high specific surface and combinations thereof.

8. The use according to claims 1-7 wherein the catalytic system charge density ranged from 5 to 250 grams of catalytic system over square meter of POCS, optionally from 20 to 200 g/m$^2$, further optionally from 30 to 150 g/m$^2$.

9. The use according to claims 1-8 wherein the glycerol steam reforming process is carried out in a temperature in the range of 550°C and 850°C, optionally from 600°C to 800°C, further optionally from 650°C to 750°C.

**10.** The use according to claims 1-9 wherein the glycerol steam reforming process is carried out with a steam-to-glycerol molar ratio ranged from 20 to 1, optionally from 15 to 1, further optionally from 12 to 1.

# EUROPEAN SEARCH REPORT

Application Number
EP 25 38 2233

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SIMASATITKUL LIDA ET AL: "Comparative CFD modeling of foam and conventional pellet catalysts in glycerol steam reforming", FUEL, IPC SIENCE AND TECHNOLOGY PRESS , GUILDFORD, GB, vol. 392, 4 March 2025 (2025-03-04), XP087750734, ISSN: 0016-2361, DOI: 10.1016/J.FUEL.2025.134843 [retrieved on 2025-03-04] * page 2, column 1, paragraph 3 * * page 7, column 2, paragraphs 6,8 * ----- | 1-10 | INV. B01J19/00 C01B3/40 |
| A | US 2005/207971 A1 (CORTRIGHT RANDY D [US] ET AL) 22 September 2005 (2005-09-22) * paragraphs [0025], [0027], [0104], [0156]; claims; figures * ----- | 1-10 | |
| A | US 2006/102519 A1 (TONKOVICH ANNA L [US] ET AL) 18 May 2006 (2006-05-18) * paragraphs [0107], [0206]; claims; figures * ----- | 1-10 | TECHNICAL FIELDS SEARCHED (IPC) |
| A | KOC SINAN ET AL: "Reforming of glycerol to hydrogen over Ni-based catalysts in a microchannel reactor", FUEL PROCESSING TECHNOLOGY, ELSEVIER BV, NL, vol. 156, 23 September 2016 (2016-09-23), pages 357-365, XP029825248, ISSN: 0378-3820, DOI: 10.1016/J.FUPROC.2016.09.019 * the whole document * ----- | 1-10 | B01J C01C C01B |
| A | CN 113 735 059 A (UNIV CENTRAL SOUTH) 3 December 2021 (2021-12-03) * the whole document * ----- | 1-10 | |

The present search report has been drawn up for all claims

1

| Place of search | Date of completion of the search | Examiner |
|---|---|---|
| Munich | 28 July 2025 | Serra, Renato |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 38 2233

This annex lists the patent family members relating to the patent documents cited in the above-mentioned European search report. The members are as contained in the European Patent Office EDP file on
The European Patent Office is in no way liable for these particulars which are merely given for the purpose of information.

28-07-2025

| Patent document cited in search report | Publication date | Patent family member(s) | Publication date |
|---|---|---|---|
| US 2005207971 A1 | 22-09-2005 | AU 2002364703 A1 | 10-06-2003 |
| | | BR 0214560 A | 09-11-2004 |
| | | CA 2467443 A1 | 05-06-2003 |
| | | CN 1656013 A | 17-08-2005 |
| | | EP 1458645 A2 | 22-09-2004 |
| | | JP 5081368 B2 | 28-11-2012 |
| | | JP 2005510437 A | 21-04-2005 |
| | | NZ 533175 A | 31-03-2006 |
| | | US 2005207971 A1 | 22-09-2005 |
| | | WO 03045841 A1 | 05-06-2003 |
| US 2006102519 A1 | 18-05-2006 | CA 2587546 A1 | 26-05-2006 |
| | | CN 101132854 A | 27-02-2008 |
| | | CN 102258968 A | 30-11-2011 |
| | | EP 1819435 A1 | 22-08-2007 |
| | | JP 5704786 B2 | 22-04-2015 |
| | | JP 2008520412 A | 19-06-2008 |
| | | KR 20070086358 A | 27-08-2007 |
| | | KR 20100038476 A | 14-04-2010 |
| | | US 2006102519 A1 | 18-05-2006 |
| | | WO 2006055609 A1 | 26-05-2006 |
| CN 113735059 A | 03-12-2021 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 113735059 A
- US 2009238751 A1


### Non-patent literature cited in the description


- **GONZÁLEZ JF** ; **ÁLVAREZ MURILLOA** ; **GONZÁLEZ ARROYO Á** ; **NOGALES-DELGADO S**. Glycerol Steam Reforming in a Pilot Plant: Effect of Temperature and Catalyst Load.. *Applied Sciences*, 2023, vol. 13 (18), 10376
- **ROCHA DHD** ; **DE SOUZA TAZ** ; **CORONADO CJR** ; **SILVEIRA JL** ; **SILVA RJ.** Exergoenvironmental analysis of hydrogen production through glycerol steam reforming. *Int J Hydrogen Energy.*, 2021, vol. 46 (1), 1385-1402
- **YUS M** ; **SOLER J** ; **HERGUIDO J** ; **MENÉNDEZ M**. Glycerol steam reforming with low steam/glycerol ratio in a two-zone fluidized bed reactor.. *Catalysis Today.*, 2018, vol. 299, 317-327
- **PASTOR-PÉREZ L** ; **SEPÚLVEDA-ESCRIBANO A**. Low temperature glycerol steam reforming on bimetallic PtSn/C catalysts: on the effect of the Sn content.. *Fuel.*, 2017, vol. 194, 222-228
- **CHARISIOU ND** ; **PAPAGERIDIS KN** ; **SIAKAVELAS G** ; **TZOUNIS L** ; **KOUSI K** ; **BAKER MA** ; **HINDER SJ** ; **SEBASTIAN V** ; **POLYCHRONOPOULOU K** ; **GOULA MA**. Glycerol steam reforming for hydrogen production over nickel supported on alumina, zirconia and silica catalysts. *Top Catal.*, 2017, vol. 60, 1226-1250
- **ARAQUE M** ; **CENTENO MA** ; **ROGER AC**. Role of ruthenium on the catalytic properties of CeZr and CeZrCo mixed oxides for glycerol steam reforming reaction toward H2 production. *Catal Today.*, 2015, vol. 242, 80-90
- **SILVA JM** ; **RIBEIRO LS** ; **ÓRFÃO JJM** ; **SORIA MA** ; **MADEIRA LM**. Low temperature glycerol steam reforming over a Rh-based catalyst combined with oxidative regeneration. *Int J Hydrogen Energy.*, 2019, vol. 44, 2461-2473
- **POMPEO F** ; **SANTORI G** ; **NICHIO NN**. Hydrogen and/or syngas from steam reforming of glycerol. Study of platinum catalysts. *Int J Hydrogen Energy.*, 2010, vol. 35, 8912-8920
- **SILVA JM** ; **SORIA MA** ; **MADEIRA LM**. Thermodynamic analysis of glycerol steam reforming for hydrogen production with in situ hydrogen and carbon dioxide separation. *J Power Sources.*, 2015, vol. 273, 423-430
- **HANIF, M.A** ; **NISAR, S** ; **AKHTAR, M.N** ; **NISAR, N.** ; **RASHID, N.** Optimized Production and Advanced Assessment of Biodiesel: A Review. *Int. J. Energy Res.*, 2018, vol. 42, 2070-2083
- **SUNDUS, F.** ; **FAZAL, M.A** ; **MASJUKI, H.H**. Tribology with Biodiesel: A Study on Enhancing Biodiesel Stability and Its Fuel Properties. *Renew. Sustain. Energy Rev*, 2017, vol. 70, 399-412
- **BOBADILLA LF** ; **ÁLVAREZ M** ; **DOMINGUEZ A** ; **ROMERO-SARRIA MI** ; **CENTENO F** ; **MONTES M** ; **ODRIOZOLA J**. Influence of the shape of Ni catalysts in the glycerol steam reforming. *Applied Catalysis B: Environmental*, 2012, vol. 123-124, 379-390
- **BOBADILLA LF** ; **BLAY V** ; **ÁLVAREZ M** ; **DOMÍNGUEZ A** ; **ROMERO-SARRIA MI** ; **MONTES M** ; **ODRIOZOLA J.** Intensifying glycerol steam reforming on a monolith catalyst: A reaction kinetic model. *Chemical Engineering Journal*, 2016, vol. 306, 933-941
- **KOC S** ; **AHMET A**. Reforming of glycerol to hydrogen over Ni-based catalysts in a microchannel reactor. *Fuel Processing Technology*, 2016, 156
- **DELPARISH A** ; **KOC S** ; **CAGLAYAN B** ; **AVCI A**. Oxidative steam reforming of glycerol to synthesis gas in a microchannel reactor. *Catalysis Today*, 2019, vol. 323, 200-208
- **GIBSON L.J** ; **ASHBY M.F**. Cellular solids: Structure and Properties. Cambridge University Press, 1988
- **IWANISZYN M**. Periodic Open Cellular Structures (POCS) as Catalyst Supports-A Review. *Energies*, 2022, vol. 15, 7703